(19) **Europäisches Patentamt / European Patent Office / Office européen des brevets**

(11) **EP 2 955 832 A2**

(12) # EUROPEAN PATENT APPLICATION

(43) Date of publication:
16.12.2015 Bulletin 2015/51

(51) Int Cl.:
$H02M \ 3/338 \ ^{(2006.01)}$  $H02M \ 1/00 \ ^{(2007.01)}$

(21) Application number: 15168084.0

(22) Date of filing: 19.05.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 10.06.2014 US 201414301084

(71) Applicant: Osram Sylvania Inc.
Danvers, MA 01923 (US)

(72) Inventors:
• Choudhury, Ayan K.
Danvers, MA Massachusetts 01923 (US)
• Kumar, Nitin
Beverly, MA Massachusetts 01915 (US)
• Ziegler, Markus
81829 München (DE)

(74) Representative: Viering, Jentschura & Partner
mbB
Patent- und Rechtsanwälte
Am Brauhaus 8
01099 Dresden (DE)

(54) **GENERATION AND REGULATION OF MULTIPLE VOLTAGE AUXILIARY SOURCE**

(57) An inverter (102) for a lighting device including one or more solid state light sources is used to power a secondary load, such as a cooling device, sensor, or control with an auxiliary power circuit (100) that provides a selectable auxiliary voltage to the secondary load. The auxiliary power circuit (100) includes a voltage regulation circuit and a voltage selection circuit. The voltage selec-

tion circuit provides a feedback voltage to the voltage regulation circuit which his indicative of auxiliary output voltage. The voltage regulation circuit operates based on the feedback voltage and a reference voltage to adjust the auxiliary voltage to a level that differs from the input voltage from the inverter (102).

FIG. 1

EP 2 955 832 A2

# Description

TECHNICAL FIELD

The present invention relates to electronics, and more specifically, to electronics for lighting devices.

BACKGROUND

Conventional light sources are being replaced with more energy efficient alternatives, such as compact fluorescent lamps (CFLs) and devices including one or more solid state light sources. Unlike a conventional incandescent lamps, more energy efficient light sources do not directly utilize the line voltages of typical wall outlets. In order to enable lighting devices including these light sources to be packaged in a form that allows use in existing lighting fixtures, electronic ballasts and electronic drivers are used. These convert the mainline power available to a fixture into a form which is directly usable by the light source. This has enabled the use of energy efficient light sources within existing sockets found in existing lighting fixtures.

SUMMARY

In an embodiment, there is provided an apparatus. The apparatus includes: a voltage regulation circuit; and a voltage selection circuit, the voltage selection circuit providing a feedback voltage to the voltage regulation circuit, the voltage regulation circuit operating based on the feedback voltage and a reference voltage to adjust an auxiliary voltage output that differs from a primary voltage input.

In a related embodiment, the voltage selection circuit may include a voltage divider that determines a feedback voltage value based on an auxiliary voltage value. In a further related embodiment, resistance values associated with the voltage divider may be adjustable. In a further related embodiment, the voltage divider may include a resistor with a controllable path to ground via a transistor. In another further related embodiment, the voltage divider may include parallel resistors with controllable paths to ground via respective transistors. In a further related embodiment, the apparatus may further include a microcontroller that controls operation of the transistors.

In another related embodiment, the voltage selection circuit may include an adjustable voltage source that provides the reference voltage. In a further related embodiment, the adjustable voltage source may selectably provide one of a plurality of voltages as the reference voltage.

In another embodiment, there is provided a system. The system includes: an inverter having a primary output for a primary load, the primary output having a voltage; and an auxiliary power circuit which provides an auxiliary voltage to a secondary load using the primary output of the inverter as an input, the auxiliary power circuit comprising a voltage regulation circuit and a voltage selection circuit, the voltage selection circuit providing a feedback voltage to the voltage regulation circuit, the voltage regulation circuit operating based on the feedback voltage and a reference voltage to set the auxiliary voltage to one of multiple selectable voltages that differ from the primary output voltage.

In a related embodiment, the primary load may include a lighting device including one or more solid state light sources. In a further related embodiment, the secondary load may include one or more of a cooling device, a sensing device, and a control device for the lighting device. In a further related embodiment, the voltage selection circuit may include a voltage divider that determines a feedback voltage value based on an auxiliary voltage value. In a further related embodiment, resistance values associated with the voltage divider may be adjustable. In a further related embodiment, the voltage divider may include a resistor with a controllable path to ground via a transistor. In another further related embodiment, the voltage divider may include parallel resistors with controllable paths to ground via respective transistors. In a further related embodiment, the system may further include a microcontroller that controls operation of the transistors.

In another related embodiment, the voltage selection circuit may include an adjustable voltage source that provides the reference voltage. In a further related embodiment, the adjustable voltage source may selectably provide one of a plurality of voltages as the reference voltage.

BRIEF DESCRIPTION OF THE DRAWINGS

The foregoing and other objects, features and advantages disclosed herein will be apparent from the following description of particular embodiments disclosed herein, as illustrated in the accompanying drawings in which like reference characters refer to the same parts throughout the different views. The drawings are not necessarily to scale, emphasis instead being placed upon illustrating the principles disclosed herein.

FIG. 1 shows a schematic diagram of a circuit that provides an auxiliary power output according to embodiments disclosed herein.

FIG. 2 is a schematic diagram of a circuit that provides an auxiliary power output at any number of different regulated voltages according to embodiments disclosed herein.

FIG. 3 is a schematic diagram of a circuit that provides an auxiliary power output at any number of different regulated voltages from an input voltage by adjusting a reference voltage $V_{Ref}$ relative to a feedback voltage $V_{Sense}$ according to embodiments disclosed herein.

DETAILED DESCRIPTION

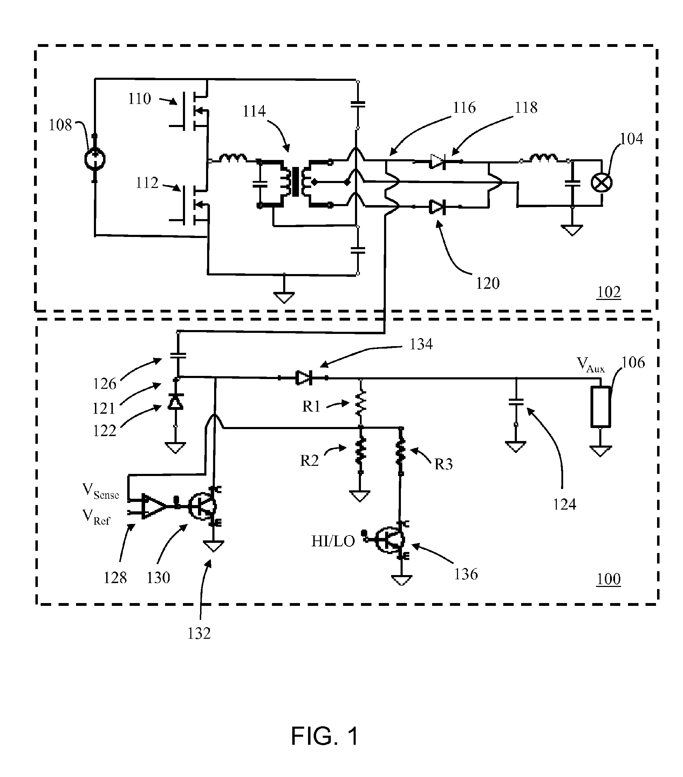

FIG. 1 shows a schematic diagram of an auxiliary power circuit 100 that provides power at two different selectable regulated voltages ($V_{aux}$) (also referred to throughout as auxiliary power circuit output voltage $V_{aux}$). Input power is provided by an inverter circuit 102, which supplies a primary load 104, such as but not limited to a lighting device including one or more solid state light sources (light emitting diodes (LEDs), organic light emitting diodes (OLEDs), polymer light emitting diodes (PLEDs), organic light emitting compounds (OLECs), and other semiconductor-based light sources, including combinations thereof). The auxiliary power circuit output voltage $V_{aux}$ may be, and in some embodiments is, used, e.g., at different voltage levels, to supply a secondary load 106. Secondary loads include, but are not limited to, cooling devices, such as but not limited to a fan, sensing devices, such as but not limited to photo sensor and/or a motion sensor, and control devices, among other things, that might be used to improve performance of the primary load. For example, a cooling device may help decrease the temperature of a lighting device, to improve efficiency. The auxiliary power circuit 100 and the inverter circuit 102 may be, and in some embodiments are, contained within the same packaging and associated with the same device, e.g., a lighting device (lamp, module, etc.) that is usable in a lighting fixture.

The input power may be supplied by any of a wide variety of suitable sources. In FIG. 1, the input power is provided by an inverter 102 that is part of an electronic circuit (ballast, power supply) for supplying power to the primary load 104. The inverter 102 utilizes a DC voltage source 108, which may be derived from an AC source (not shown) such as mainline power and rectified suitably. Transistors 110 and 112 are driven by a control circuit in order to alternate the flow of current from the DC voltage source 108 across the primary coil of a transformer 114 in different directions. The changing magnetic field induces current flow in a secondary coil of the transformer 114, resulting in a high frequency AC output. The AC output of the secondary coil is rectified with diodes 118,120 in order to power the primary load 104 with a DC voltage. Inverters are well understood in the art, so the inverter will not be described in greater detail. The auxiliary power circuit 100 receives AC power from the output of the transformer 114 at a node 116.

The auxiliary power circuit 100 utilizes the AC output of the transformer 114 to charge an auxiliary power storage capacitor 124 to provide a selectable regulated voltage $V_{aux}$ to the secondary load 106. A rectifying diode 122 converts the full wave input from the inverter circuit 102 to a half wave, as seen at a node 121. The half wave power charges the auxiliary power storage capacitor 124. A limiting capacitor 126 limits the current flow to the auxiliary power circuit 100 and provides short circuit protection. More particularly, if the output across the auxiliary power storage capacitor 124 is shorted, then the impedance of the limiting capacitor 126 limits the current drawn from the inverter circuit 102.

Voltage regulation is provided by a regulation circuit including a comparator 128 and a transistor 130. The regulation circuit operates by controlling charging of the auxiliary power storage capacitor 124 based on the difference between a feedback voltage $V_{Sense}$ and a reference voltage $V_{Ref}$. The reference voltage $V_{Ref}$ may be a constant $V_{DC}$ from any suitable source. $V_{Sense}$ is a feedback voltage that is indicative of, but not equal to, the auxiliary power circuit output voltage $V_{Aux}$. The reference voltage $V_{Ref}$ is provided to an inverting input of the comparator 128. The feedback voltage $V_{Sense}$ is provided to a non-inverting input of the comparator 128. An output of the comparator 128 is connected to a base of the transistor 130 (or a gate if the transistor 130 is a MOSFET). When the feedback voltage $V_{Sense}$ is less than the reference voltage $V_{Ref}$, the output of the comparator 128 is low, and current does not flow from a collector to an emitter of the transistor (or from a drain to a source of a MOSFET transistor) 130, i.e., the switch state of the transistor 130 is OFF. This allows current from the inverter circuit 102 to charge the storage capacitor 124. Consequently, the auxiliary power circuit voltage $V_{Aux}$ increases. When the feedback voltage $V_{Sense}$ is greater than the reference voltage $V_{Ref}$, the output of the comparator 128 is high and current flows from the collector to the emitter of the transistor (or from the drain to the source of the MOSFET transistor) 130, i.e., the switch state of the transistor 130 is ON. The path to ground 132 via the transistor 130 prevents current from the inverter circuit 102 from charging the storage capacitor 124. Consequently, the voltage across the storage capacitor 124 decreases, and the auxiliary power circuit voltage $V_{Aux}$ decreases. A diode 134 prevents the auxiliary power circuit voltage $V_{Aux}$ from being pulled to ground when the output of the comparator 128 is high. Thus, the auxiliary power circuit voltage $V_{Aux}$ is regulated as a function of the difference between the feedback voltage $V_{Sense}$ and the reference voltage $V_{Ref}$.

Two different auxiliary voltages $V_{Aux}$ are provided by adjusting the feedback voltage $V_{Sense}$ with voltage selection circuitry. In FIG. 1, the voltage selection circuitry includes a transistor 136 and a voltage divider circuit formed by resistors R1, R2, and R3. The resistor R1 is the upper leg of the voltage divider circuit. The resistors R2 and R3 are the lower leg of the voltage divider circuit. The auxiliary power circuit voltage $V_{Aux}$ is the input of the voltage divider and the feedback voltage $V_{Sense}$ is the output of the voltage divider. The transistor 136 is used to adjust the resistance value of the lower leg of the voltage divider in order to change the auxiliary power circuit voltage $V_{Aux}$. When the voltage at a base of the transistor 136 is set to low, the switch state of the transistor 136 is OFF. Consequently, there is no electrical path to ground via the transistor 136 and the resistor R3 is floating. In this situation, the values of the feedback voltage $V_{Sense}$ and a first auxiliary power circuit voltage $V_{Aux1}$ are as follows:

$$V_{Sense} = V_{Aux} * R2/(R1 + R2);\ and$$

$$V_{Aux1} = V_{Sense} * (R1 + R2)/R2.$$

When the voltage at the base of the transistor 136 is set to high, the switch state of the transistor 136 is ON. Consequently, the resistor R3 is pulled to ground via the transistor 136. The resistors R2 and R3, which are now in parallel, present a parallel resistance value $R_P$ at the lower leg of the voltage divider. The value of $R_p$ is as follows:

$$R_P = (R2*R3)/(R2+R3).$$

In this situation the value of the second auxiliary voltage VAux2 is as follows:

$$V_{Aux2} = V_{Sense} * (R1 + R_P)/R_P.$$

Changing $V_{Sense}$ in this manner causes the voltage regulation circuit to reset the auxiliary power circuit voltage $V_{Aux}$. More particularly, increasing the resistance value of the lower leg of the voltage divider decreases $V_{Aux}$, and decreasing the resistance value of the lower leg of the voltage divider increases $V_{Aux}$. In FIG. 1, the resistance value of the lower leg of the voltage divider can be set to either of two different values by operating the transistor 136 such that two different levels of $V_{Aux}$ can be provided. The actual voltage values will be a function of the input voltage, reference voltage, and component values. The switch state of the transistor 136 may be, and in some embodiments is, controlled by a microcontroller or other components in order to select a high or low auxiliary voltage $V_{Aux}$.

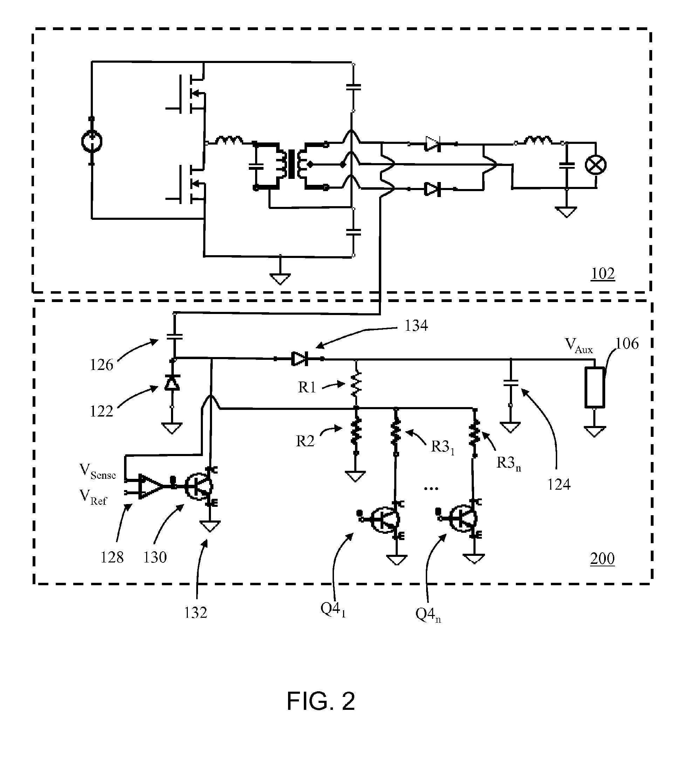

FIG. 2 is a schematic diagram of an auxiliary power circuit 200 that provides auxiliary power at any number of different regulated voltages $V_{Aux}$. The inverter circuit 102 described above in regards to FIG. 1 is utilized to provide input power. Further, as in the previously described auxiliary power circuit 100 of FIG. 1, the voltage regulation circuit utilizes a comparator 128 and a transistor 130. Further, the feedback voltage $V_{Sense}$ is adjusted relative to a reference voltage $V_{Ref}$. However, in embodiments according to FIG. 2, the voltage divider circuit includes resistors R1, R2, and $R3_1$-$R3_n$, which are associated with transistors $Q4_1$-$Q4_n$, respectively. The resistors R2 and $R3_1$-$R3_n$ are the lower leg of the voltage divider. Each resistor $R3_1$-$R3_n$ is independently switched by the corresponding transistor $Q4_1$-$Q4_n$ in order to select whether its resistance value contributes to the voltage divider. In other words, each of the resistors $R3_1$-$R3_n$ can

be selectably placed in parallel with the resistor R2, and the contribution of each resistor $R3_1$-$R3_n$ to the resistance of the voltage divider can be selectably negated. A resistor associated with an open transistor will float. A resistor associated with a closed transistor will contribute to the resistance of the voltage divider, and thereby influence the output of the voltage divider, i.e., the feedback voltage $V_{Sense}$. Consequently, $2^n$ regulated levels of auxiliary voltages $V_{Aux}$ are provided, where n is determined based on the desired number of different levels of $V_{Aux}$, for example. The transistors may be, and in some embodiments are, controlled via a microcontroller.

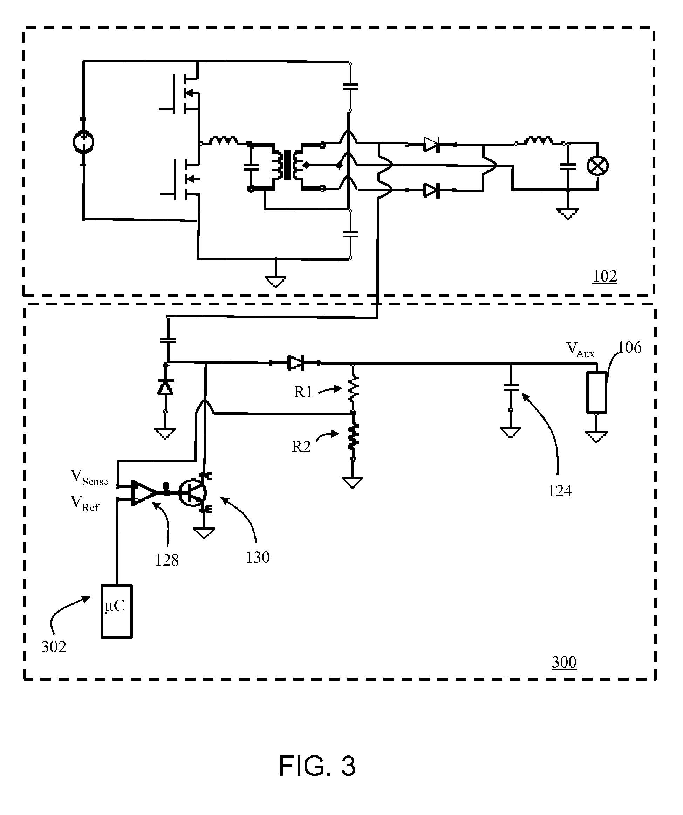

FIG. 3 is a schematic diagram of an auxiliary power circuit 300 that provides auxiliary power at any number of different regulated auxiliary power circuit output voltages $V_{Aux}$. The inverter circuit 102 described above in regards to FIG. 1 is again utilized to provide input power. Further, as in the previously described auxiliary power circuit 100 of FIG. 1, the voltage regulation circuitry utilizes a comparator 128 and a transistor 130. Further, the feedback voltage $V_{Sense}$ is adjusted relative to a reference voltage $V_{Ref}$. However, in embodiments according to FIG. 3, the different regulated voltages $V_{Aux}$ are selected by adjusting the reference voltage $V_{Ref}$. In FIG. 3, the voltage divider circuit includes resistors $R_1$ and $R_2$, and the resistance values of the voltage divider are constant. The voltage regulation circuit includes a microcontroller 302 that provides multiple different selectable values of DC reference voltage $V_{Ref}$. The reference voltage $V_{Ref}$ is provided to the inverting input of the comparator 128. The feedback voltage $V_{Sense}$ is provided to the non-inverting input of the comparator 128. The feedback voltage $V_{Sense}$ is a function of the auxiliary voltage $V_{Aux}$ and the values of the resistors in the voltage divider circuit. $V_{Sense}$ can be calculated as follows:

$$V_{Sense} = V_{Aux} * R2/(R1 + R2).$$

In other words,

$$V_{Aux} = V_{Sense} * (R1 + R2)/R2.$$

When the feedback voltage $V_{Sense}$ is less than the reference voltage $V_{Ref}$, the output of the comparator 128 is low and current does not flow from the collector to the emitter of the transistor 130, i.e., the switch state of the transistor 130 is OFF. This allows current from the inverter circuit 102 to charge the storage capacitor 124. Consequently, the auxiliary voltage $V_{Aux}$ increases. When the feedback voltage $V_{Sense}$ is greater than the reference voltage $V_{Ref}$, the output of the comparator is high and current flows from the collector to the emitter of the transistor 130, i.e., the switch state of the transistor 130 is ON. The path to ground via the transistor 130 prevents current from the inverter circuit 102 from charging the storage capacitor 106. Consequently, the voltage across the storage capacitor 106 decreases and the auxiliary voltage $V_{Aux}$ decreases. Thus, the auxiliary voltage $V_{Aux}$ is regulated as a function of the difference between the feedback voltage $V_{Sense}$ and the reference voltage $V_{Ref}$, which is determined by selecting the reference voltage $V_{Ref}$, from a plurality of different possible values.

The concepts described above may be, and in some embodiments are, used in combination. For example, the auxiliary power circuit could include components that adjust the reference voltage provided to the voltage regulation circuitry and components that adjust the feedback voltage provided to the voltage regulation circuitry, e.g., a voltage divider with different selectable resistance values.

Embodiments of the systems and methods described above may and do comprise computer components and computer-implemented steps that will be apparent to those skilled in the art. For example, it should be understood by one of skill in the art that the computer-implemented steps may be, and in some embodiments are, stored as computer-executable instructions on a memory such as, for example, floppy disks, hard disks, optical disks, Flash ROMS, nonvolatile ROM, and RAM. Furthermore, it should be understood by one of skill in the art that the computer-executable instructions may be executed on a variety of processors such as, for example, microprocessors, digital signal processors, gate arrays, etc. For ease of exposition, not every step or element of the systems and methods described above is described herein as part of a computer system, but those skilled in the art will recognize that each step or element may have a corresponding computer system or software component. Such computer system and/or software components are therefore enabled by describing their corresponding steps or elements (that is, their functionality), and are within the scope of the disclosure. Thus, embodiments described herein are not limited to a particular hardware or software configuration, and may find applicability in many computing or processing environments. Embodiments may be implemented in hardware or software, or a combination of hardware and software. Embodiments may be implemented in one or more computer programs, where a computer program may be understood to include one or more processor executable instructions. The computer program(s) may execute on one or more programmable processors, and may be stored on one or more storage medium readable by the processor (including volatile and non-volatile memory and/or storage elements), one or more input devices, and/or one or more output devices. The processor thus may access one or more input devices to obtain input data, and may access one or more output devices to communicate output data. The input and/ or output devices may include one or more of the following: Random Access Memory (RAM), Redundant Array of Independent Disks (RAID), floppy drive, CD, DVD, magnetic disk, internal hard drive, external hard drive, memory stick, or other storage device capable of being accessed by a processor as provided herein, where such aforementioned examples are not exhaustive, and are for illustration and not limitation.

The computer program(s) may be implemented using one or more high level procedural or object-oriented programming languages to communicate with a computer system; however, the program(s) may be implemented in assembly or machine language, if desired. The language may be compiled or interpreted.

As provided herein, the processor(s) may thus be embedded in one or more devices that may be operated independently or together in a networked environment, where the network may include, for example, a Local Area Network (LAN), wide area network (WAN), and/or may include an intranet and/or the internet and/or another network. The network(s) may be wired or wireless or a combination thereof and may use one or more communications protocols to facilitate communications between the different processors. The processors may be configured for distributed processing and may utilize, in some embodiments, a client-server model as needed. Accordingly, the methods and systems may utilize multiple processors and/or processor devices, and the processor instructions may be divided amongst such single- or multiple-processor/ devices.

The device(s) or computer systems that integrate with the processor(s) may include, for example, a personal computer(s), workstation(s) (e.g., Sun, HP), personal digital assistant(s) (PDA(s)), handheld device(s) such as cellular telephone(s) or smart cellphone(s), laptop(s), handheld computer(s), or another device(s) capable of being integrated with a processor(s) that may operate as provided herein. Accordingly, the devices provided herein are not exhaustive and are provided for illustration and not limitation.

References to "a microprocessor" and "a processor", or "the microprocessor" and "the processor," may be understood to include one or more microprocessors that may communicate in a stand-alone and/ or a distributed environment(s), and may thus be configured to communicate via wired or wireless communications with other processors, where such one or more processor may be configured to operate on one or more processor-controlled devices that may be similar or different devices. Use of such "microprocessor" or "processor" terminology may thus also be understood to include a central processing unit, an arithmetic logic unit, an application-specific integrated circuit (IC), and/or a task engine, with such examples provided for illustration and not limitation.

Furthermore, references to memory, unless otherwise specified, may include one or more processor-readable and accessible memory elements and/or components that may be internal to the processor-controlled device, external to the processor-controlled device, and/or may be accessed via a wired or wireless network using a variety of communications protocols, and unless otherwise specified, may be arranged to include a combination of external and internal memory devices, where such memory may be contiguous and/or partitioned based on the application. Accordingly, references to a database may be understood to include one or more memory associations, where such references may include commercially available database products (e.g., SQL, Informix, Oracle) and also proprietary databases, and may also include other structures for associating memory such as links, queues, graphs, trees, with such structures provided for illustration and not limitation.

References to a network, unless provided otherwise, may include one or more intranets and/ or the internet. References herein to microprocessor instructions or microprocessor-executable instructions, in accordance with the above, may be understood to include programmable hardware.

Unless otherwise stated, use of the word "substantially" may be construed to include a precise relationship, condition, arrangement, orientation, and/or other characteristic, and deviations thereof as understood by one of ordinary skill in the art, to the extent that such deviations do not materially affect the disclosed methods and systems.

Throughout the entirety of the present disclosure, use of the articles "a" and/or "an" and/or "the" to modify a noun may be understood to be used for convenience and to include one, or more than one, of the modified noun, unless otherwise specifically stated. The terms "comprising", "including" and "having" are intended to be inclusive and mean that there may be additional elements other than the listed elements.

Elements, components, modules, and/or parts thereof that are described and/or otherwise portrayed through the figures to communicate with, be associated with, and/or be based on, something else, may be understood to so communicate, be associated with, and or be based on in a direct and/or indirect manner, unless otherwise stipulated herein.

Although the methods and systems have been described relative to a specific embodiment thereof, they are not so limited. Obviously many modifications and variations may become apparent in light of the above teachings. Many additional changes in the details, materials, and arrangement of parts, herein described and illustrated, may be made by those skilled in the art.

## Claims

1. An apparatus comprising:

   a voltage regulation circuit; and
   a voltage selection circuit, the voltage selection circuit providing a feedback voltage to the voltage regulation circuit, the voltage regulation circuit operating based on the feedback voltage and a reference voltage to adjust an auxiliary voltage output that differs from a primary voltage input.

2. The apparatus of claim 1, wherein the voltage selection circuit includes a voltage divider that determines a feedback voltage value based on an auxiliary voltage value.

3. The apparatus of claim 2, wherein resistance values associated with the voltage divider are adjustable, wherein preferably the voltage divider includes a resistor with a controllable path to ground via a transistor.

4. The apparatus of claim 3, wherein the voltage divider includes parallel resistors with controllable paths to ground via respective transistors, wherein preferably the apparatus further includes a microcontroller that controls operation of the transistors.

5. The apparatus of any one of claims 1 to 4, wherein the voltage selection circuit includes an adjustable voltage source that provides the reference voltage.

6. The apparatus of claim 5, wherein the adjustable voltage source selectably provides one of a plurality of voltages as the reference voltage.

7. A system comprising:

   an inverter (102) having a primary output for a primary load (104), the primary output having a voltage; and
   an auxiliary power circuit (100) which provides an auxiliary voltage to a secondary load using the primary output of the inverter (102) as an input, the auxiliary power circuit (100) comprising a voltage regulation circuit and a voltage selection circuit, the voltage selection circuit providing a feedback voltage to the voltage regulation circuit, the voltage regulation circuit operating based on the feedback voltage and a reference voltage to set the auxiliary voltage to one of multiple selectable voltages that differ from the primary output voltage.

8. The system of claim 7, wherein the primary load (104) comprises a lighting device including one or more solid state light sources.

9. The system of claim 8, wherein the secondary load comprises one or more of a cooling device, a sensing device, and a control device for the lighting device.

10. The system of claim 9, wherein the voltage selection circuit includes a voltage divider that determines a feedback voltage value based on an auxiliary voltage value.

11. The system of claim 10, wherein resistance values associated with the voltage divider are adjustable.

12. The system of claim 11, wherein the voltage divider includes a resistor with a controllable path to ground via a transistor.

13. The system of claim 11, wherein the voltage divider includes parallel resistors with controllable paths to ground via respective transistors.

14. The system of claim 13, further including a microcontroller that controls operation of the transistors.

15. The system of any one of claims 9 to 14, wherein the voltage selection circuit includes an adjustable voltage source that provides the reference voltage, wherein preferably the adjustable voltage source selectably provides one of a plurality of voltages as the reference voltage.

FIG. 1

FIG. 2

FIG. 3